# DEMANDE DE BREVET EUROPEEN

(11) **EP 1 452 373 A1**
(43) Date de publication de la demande: **01.09.2004**
(21) Numéro de dépôt: 04290516.6
(22) Date de dépôt: 25.02.2004
(51) Int. Cl.: B60J 10/08, B60J 5/04

(54) **Elément de fixation d'extrémité de joint de porte**

(30) Priorité: 28.02.2003 FR 0302474
(71) Demandeur: Renault s.a.s., 92100 Boulogne Billancourt (FR)
(72) Inventeur: Hewak, Grégor, 95490 Vaureal (FR); Vivier, Pierre, 75014 Paris (FR)

(57) **Abrégé**

L'invention concerne un élément de fixation d'extrémité de joint de porte de véhicule automobile, caractérisé en ce qu'il présente une surface de fixation (20) sensiblement plane et de forme sensiblement complémentaire à une surface (13) de la porte destinée à la recevoir, et une partie (22), solidaire de la surface de fixation (20), comportant au moins une première surface (32) qui porte un joint (14), ladite surface de fixation (20) comportant au moins un orifice de fixation (24) sur la porte et ladite partie (22) présentant au moins un moyen de fixation (28) sur la porte

## Description

L'invention concerne un élément de fixation de l'extrémité d'un joint de porte pour un véhicule automobile.

Un tel élément est destiné à assurer la fixation de l'extrémité inférieure du joint formant la coulisse de vitre sur la carrosserie de la porte, au niveau du bord de la porte.

Actuellement, l'extrémité de la coulisse de vitre est directement fixée sur la carrosserie de la porte, ce qui nécessite de prévoir des moyens de fixation adéquats sur cette dernière, et nécessite une découpe manuelle pour effectuer la jonction entre l'extrémité de la coulisse et d'autres éléments, tels qu'un joint anti salissure et une surface extérieure de porte.

L'invention vise à pallier ces inconvénients en proposant un élément de fixation permettant une fixation simple et efficace du joint sur la carrosserie de la porte, sans nécessiter de formes complexes pour sa fixation. L'élément selon l'invention présente également l'avantage de procurer une finition esthétique de la fixation du joint sur la porte.

A cet effet, l'objet de l'invention concerne un élément de fixation d'extrémité de joint de porte de véhicule automobile, caractérisé en ce qu'il présente une surface de fixation sensiblement plane et de forme sensiblement complémentaire à une surface de la porte destinée à la recevoir, et une partie, solidaire de la surface de fixation, comportant au moins une première surface qui porte un joint, ladite surface de fixation comportant au moins un orifice de fixation sur la porte et ladite partie présentant au moins un moyen de fixation sur la porte.

L'élément est ainsi fixé sur la porte par au moins deux points de fixation dont un seul peut nécessiter l'utilisation d'un outil, et le joint est encliqueté de manière sûre et rapide dans l'élément. Le joint recouvre alors au moins partiellement la première surface qui le porte et l'intérieur de l'élément, améliorant l'effet esthétique de l'ensemble.

Avantageusement, l'élément peut comporter lesdits moyens de fixation comprenant au moins une saillie sensiblement en forme de L dirigée vers la surface de la porte, afin de participer à la fixation de l'élément.

Avantageusement, la première surface comporte au moins un orifice destiné à l'encliquetage du joint.

Plus particulièrement, l'élément peut comporter une deuxième surface, solidaire en partie de la surface de fixation, qui est localisé dans le prolongement d'un bord formé par un panneau extérieur de porte.

Avantageusement, la surface de fixation comporte un bord d'appui contre lequel un deuxième joint est guidé. Notamment, la deuxième surface peut former une butée d'une extrémité de ce joint.

L'invention est maintenant décrite en référence aux dessins annexés, non limitatifs, dans lesquels :
- la figure 1 est une représentation en perspective d'un mode de réalisation de l'élément selon l'invention du côté de sa concavité, l'élément étant destiné à être fixé sur une porte arrière droite ;
- la figure 2 est une représentation en perspective de l'élément fixé sur la carrosserie d'une porte arrière gauche, la coulisse de vitre étant en place. Pour plus de clarté seule une partie de la porte est représentée ;

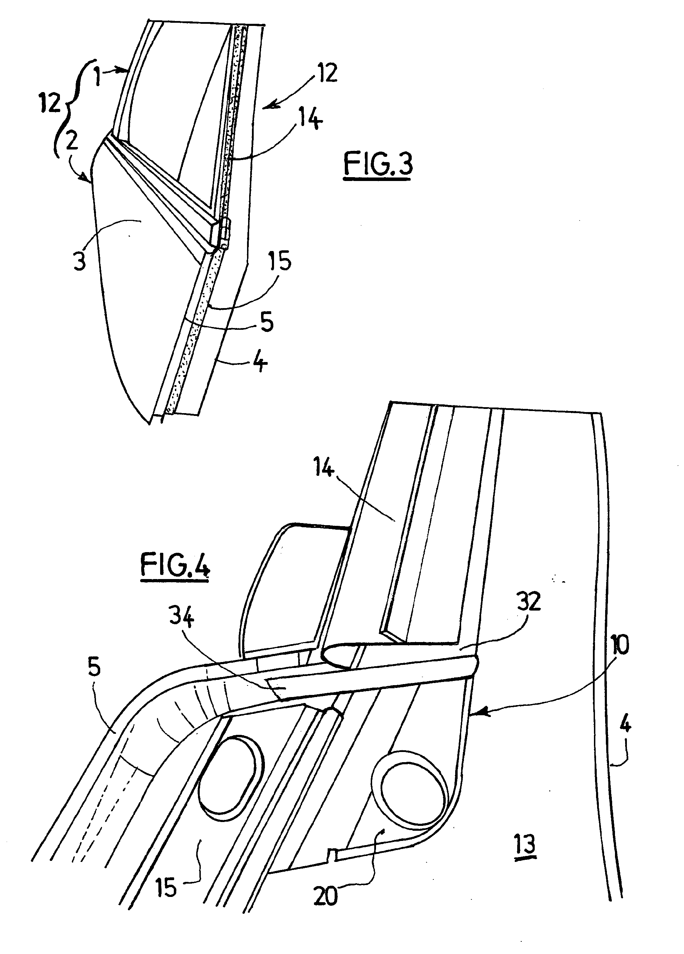

- la figure 3 est une représentation en perspective d'une porte de véhicule sur laquelle est fixé un élément selon l'invention, vue du côté extérieur ;
- la figure 4 est une vue de l'élément fixé sur la porte vue du côté de sa face latérale.

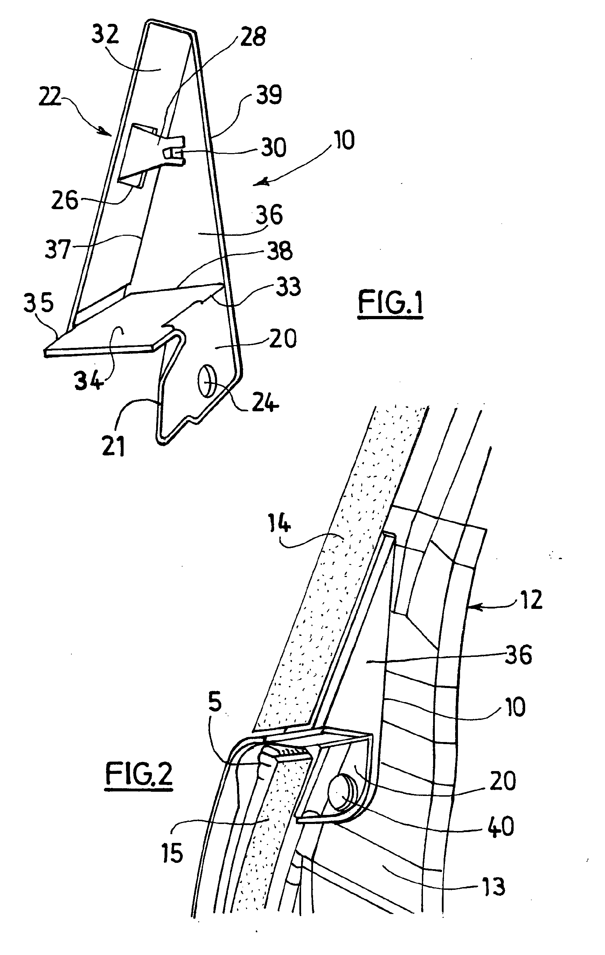

Un mode de réalisation d'un élément de fixation 10 est décrit en référence aux figures. Cet élément est destiné à être fixé sur la carrosserie d'une porte de véhicule 12. La porte 12 comporte une partie supérieure 1 et une partie inférieure 2 située en dessous du niveau de la vitre. La partie inférieure 2 est formée entre autres d'un panneau extérieur 3, d'un panneau intérieur 4 et d'une surface latérale 13 disposée sensiblement transversalement aux panneaux 3 et 4. Le panneau extérieur 3 se prolonge au-delà de la surface latérale 13 afin de former un bord 5. La surface latérale 13 est visible sur les figures 2 et 4.

Sur l'élément de fixation 10, est fixée l'extrémité d'un joint de porte, formant par exemple une coulisse de vitre 14, (figures 2 et 4). Cette coulisse 14 s'étend le long du bord supérieur de la porte. Un joint anti salissure 15 vient prendre appui sur la partie inférieure de l'élément de fixation 10.

L'élément de fixation 10 présente une surface de fixation 20 sensiblement plane et de forme sensiblement complémentaire à la surface 13 de la porte 12 destinée à la recevoir. La surface de fixation 20 comporte un bord d'appui 21 contre lequel le joint anti salissure 5, par exemple, est guidé. Il présente également une partie en forme de coin 22, solidaire de la surface de fixation 20. La partie en forme de coin est constituée d'au moins une première surface 32 formant une continuité d'une partie de la porte 12 destinée à recevoir la coulisse de vitre 14. Dans notre exemple de réalisation, la surface 32 est sensiblement plane longiligne et s'étend dans un plan formant un angle aigu avec le plan de la surface de fixation 20. Une troisième surface 36 sensiblement plane, est solidaire de la première surface 32 par un premier coté 37 et solidaire par un deuxième coté 38 d'une deuxième surface 34. Cette deuxième surface 34 est sensiblement plane et sensiblement perpendiculaire à la surface de fixation 20, dont un coté 33 est solidaire en partie de la surface de fixation 20 et dont le coté opposé 35 est solidaire en partie de la première surface 32. La surface 34 s'étend de manière à prolonger l'extrémité du bord 5 afin de former une finition et de dissimuler l'extrémité supérieure du joint anti salissure. La surface 34 peut être une butée du joint anti salissure. La troisième surface 36 comporte un troisième coté 39 qui forme un appui contre la structure de la porte. Ce troisième coté 39 est sensiblement dans le même plan que celui de la surface de fixation 20 qui est en contact avec la paroi 13.

La surface de fixation 20 comporte au moins un orifice de fixation 24, tandis que la partie en forme de coin 22 présente un orifice 26 destiné à l'encliquetage du joint 14. A cet effet, le joint 14 présente, par exemple, un téton apte à venir s'encliqueter dans l'orifice 26. La partie en forme de coin 22 présente également des moyens de fixation par encliquetage sur la porte.

Dans le mode de réalisation représenté, les moyens de fixation comprennent une saillie 28 sensiblement en forme de L dirigée vers le plan d'appui formé par le coté 39 et la surface de fixation 20 et solidaire d'un bord de l'orifice 26. L'extrémité libre du L de la saillie 28 forme un crochet orienté en direction de la troisième surface 36, le crochet étant localisé de l'autre coté du plan d'appui formé par le coté 39 et la surface de fixation 20 afin de pénétrer dans un orifice de la structure de la porte pour y créer un point de fixation. De plus le crochet comporte une partie saillante 30 permettant d'améliorer l'encliquetage de l'élément 10 sur la porte.

Bien entendu, on peut prévoir un plus grand nombre de saillies et celles-ci peuvent être disposées à distance de l'orifice 26.

Dans l'exemple, la première surface 32 présente une forme sensiblement rectangulaire et comporte sensiblement en son milieu l'orifice 26 et la saillie 28, sensiblement parallèle à la troisième surface 36.

L'élément de fixation 10 peut être réalisé en métal, par exemple en aluminium, ou en matière plastique en fonction de l'habillage de l'habitacle de l'automobile.

Bien entendu, la partie en forme de coin 22 de l'élément peut présenter des surfaces de formes différentes, sans sortir du cadre de l'invention, pour différents types de véhicules.

Le montage de l'élément 10 est réalisé de la manière suivante (figure 2). L'élément est appliqué contre surface latérale 13 de la porte, de sorte que sa surface de fixation 20 et le bord 39 soient en appui sur cette dernière, la saillie 28 de l'élément venant s'encliqueter dans une partie correspondante (non représentée) de la paroi 13. L'élément est alors fixé à la paroi 13 par un rivet 40 traversant l'orifice 24. Cette fixation peut également être réalisée par vissage ou analogues. La coulisse de vitre 14 est alors mise en place et une partie de son extrémité (non représentée) est insérée dans l'orifice 26 de l'élément 10, de sorte que la coulisse recouvre partiellement l'élément 10. Seules les surfaces 34 et 36 sont alors visibles.

Les éléments de fixation de deux portes arrières sont symétriques par rapport à un plan, tel que cela est visible sur les figures.

L'élément de fixation selon l'invention peut être adapté et fixé à tout type de porte.

## Revendications

1. Elément de fixation d'extrémité de joint de porte de véhicule automobile, **caractérisé en ce qu'**il présente une surface de fixation (20) sensiblement plane et de forme sensiblement complémentaire à une surface (13) de la porte destinée à la recevoir, et une partie (22), solidaire de la surface de fixation (20), comportant au moins une première surface (32) qui porte un joint (14), ladite surface de fixation (20) comportant au moins un orifice de fixation (24) sur la porte et ladite partie (22) présentant au moins un moyen de fixation (28) sur la porte.

2. Elément de fixation selon la revendication 1, **caractérisé en ce que** lesdits moyens de fixation (28) comprennent au moins une saillie sensiblement en forme de L dirigée vers la surface (13) de la porte.

3. Elément de fixation selon la revendication 1 ou 2, **caractérisé en ce que** la première surface (32) comporte au moins un orifice (26) destiné à l'encliquetage du joint (14).

4. Elément de fixation selon l'une quelconque des revendications précédentes, **caractérisé en ce qu'**il comporte une deuxième surface (34), solidaire en partie de la surface de fixation (20), qui est localisé dans le prolongement d'un bord formé par un panneau extérieur (3) de porte.

5. Elément de fixation selon l'une quelconque des revendications précédentes, **caractérisé en ce que** la surface de fixation (20) comporte un bord d'appui (21) contre lequel un deuxième joint (5) est guidé.

6. Elément de fixation selon la revendication 5, **caractérisé en ce que** la deuxième surface (34) forme une butée d'une extrémité du deuxième joint (5).

7. Elément de fixation selon l'une des revendications 1 à 6, **caractérisé en ce qu'**il est en métal.

8. Elément de fixation selon l'une des revendications 1 à 6, **caractérisé en ce qu'**il est en matière plastique.
